# EUROPEAN PATENT APPLICATION

(11) **EP 4 560 473 A1**
(43) Date of publication of application: **28.05.2025**
(21) Application number: 24212158.0
(22) Date of filing: 11.11.2024
(51) Int. Cl.: G06F 9/48, G06F 9/52, G06F 11/30, G06F 11/34

(54) **DETERMINISTIC TIME MANAGEMENT AND TIME MANAGEMENT UNIT FOR MULTI-CORE PROCESSORS**

(30) Priority: 23.11.2023 DE 102023132686
(71) Applicant: Airbus Defence and Space GmbH, 82024 Taufkirchen (DE)
(72) Inventor: BAHLE, Sandro, 82024 Taufkirchen (DE); BAER, Nicolaus, 82024 Taufkirchen (DE)
(74) Representative: Isarpatent

(57) **Abstract**

The invention discloses a method and a system for deterministically managing execution of a multiplicity of applications by a multi-core processor on a multiplicity of shared resources. The system comprises a time management unit, TMU, for controlling the execution of at least one application of the multiplicity of applications; a control and/or message bus for transmitting messages between the TMU and each of a multiplicity of cores of the multi-core processor; connection and/or arbitration logic for connecting the multiplicity of cores of the multi-core processor to a multiplicity of shared resources based on an action by the TMU to control the execution of the at least one application; wherein the TMU is configured to receive a "checkpoint reached" message from the at least one application, and the "checkpoint reached" message is sent by the at least one application. The presented method and system enable the control and deterministic execution of applications of high integrity levels.

## Description

### TECHNICAL FIELD OF THE INVENTION

The present invention relates to deterministic methods and devices for managing shared resources, in particular a system having a time management unit for managing the execution of tasks or applications by multi-core processors.

### BACKGROUND OF THE INVENTION

In a system's shared resources, interference can occur because processor cores - hereinafter referred to as cores that may also include other function blocks in the processor - on which applications are executed try to access the shared resources at the same time. This may result in an execution time of one or more applications varying and/or the execution time of an application not being able to be deterministically determined in advance.

A core within the meaning of the present disclosure can be a hardware module that executes instructions (e.g. hard-coded instructions, microcode or software loaded via an operating system) or, for example, a hardware accelerator (e.g. a network interface, UART (*universal asynchronous receiver transmitter*)*,* I2C (*inter-integrated circuit*)*,* TWI (*two wire interface*)*,* CAN (*controller area network*), network packet manager, cryptographic processing units, artificial intelligence (Al) accelerator, GPU (*graphics processor unit*))*.* A core can execute a plurality of threads, but some core-internal resources can also be shared between threads (cf. also paragraphs [0014] to [0016] of the document US 2008/250415 A1 discussed below).

Multi-core processors can, for example, require applications executed on different cores to have access to resources shared by a plurality of cores. However, simultaneous access may not be allowed for some resources. Consequently, it is necessary to determine, for example in accordance with arbitration logic, whether and possibly in what order the resource and/or function blocks can be accessed and/or for how long access is allowed. Although widespread, such a concept can cause an application to stop or be deferred for an indefinite time.

However, in safety-critical applications, as can be frequently encountered, for example, in aviation, the automotive industry or the railway industry, certain tasks must be executed reliably, often also repeatedly, e.g. several times per second, in a predictable and/or a preset period in order to meet, for example, requirements for the safety of a system. Otherwise, the system cannot be certified in accordance with recognized industry standards such as DO-178C/ED-12C, AMC 20-193, ISO 26262, EN 50128 or IEC 61508.

In order to meet the requirements for the safety of a system, methods for determining an execution time of safety-critical applications are known. An example is the analysis of a *worst case execution time* (WCET). Such an analysis can be used to ascertain and/or determine a limit for an execution time for executing a task and/or an application, including a safety margin that is often dependent on the application. However, the ascertained execution time must be very conservative for applications that require high reliability, such as for DAL A (*development assurance level,* DAL) avionics software, in order to be able to ensure that the applications have actually been executed within a set deadline, so as not to miss the set deadline.

Modern multi-core processors can also have complex dependencies between resources. For example, there may be dependencies between the local instruction caches, data caches and translation buffers of a core and/or the corresponding resources of other cores. Furthermore, there may also be dependencies between shared resources that can be accessed by a plurality of cores. A load-level cache, a main memory, a hardware accelerator or an I/O interface block can be an example of a dependent and shared resource.

Although some of these dependencies are described in the documents from the manufacturers of the processors, technical details that are important for successful hardware and/or software certification are often missing. As a result, it may be necessary to set wide limits for an execution time for applications that require high reliability in order to ensure that the applications have actually been executed within the intended times.

For processors with a single core and a relatively simple microarchitecture, the execution time can be determined by methods based on a static analysis of the application's code. However, these methods may not be practical or feasible for modern architectures with multi-core processors, e.g. due to the sheer complexity and/or size of the system under consideration. However, for certification of such systems, the requirements for safety remain the same, with the result that wide limits for the execution time for applications must also be set for such systems according to the above-mentioned methods. This may result in the available resources not being able to be used or not being able to be used in full, for example due to the safety margins.

Such restrictions on the availability of resources can be even more severe when applications with high requirements for their reliability are executed on the same core or cores together with applications with low requirements for their reliability, even though they could be executed on separate cores. Increasing the number of cores and potentially shared resources per processor can result in an even more conservative determination of the execution time and additional safety margins.

Applications can also be distributed to a specific processor for execution according to the required integrity level, as defined in the relevant standards, for example. For example, a processor may only be allowed to execute applications that belong to the same integrity level. Therefore, a plurality of processors may be required in the case of a plurality of integrity levels. This in turn can increase the size and complexity of a system and increase the need to manage it. The use of a plurality of processors may also contradict a requirement to reduce the size, weight, and/or power consumption of the system.

To enable comparatively small safety margins, e.g. for avionics applications of high integrity levels such as DAL A or DAL B, access to shared resources can be prioritized for those applications. Lower safety margins would then in turn enable higher resource utilization.

Implementing such prioritization can mean sacrificing timely execution of applications with lower integrity levels in favour of timely execution of applications with higher integrity levels. This can mean, for example, that the execution of communication software is interrupted in order to allow execution and timely completion of an application that performs a calculation to control a flight. Prioritization may make it possible to reduce limits for the execution time of high-integrity applications and enable more efficient use of the available resources.

To ensure that an application has completed its tasks on time, EP 3 291 094 A1 discloses a monitoring system that monitors progress of the applications via a hardware interface. The monitoring system is not part of the processor, but is connected to it. The monitoring system has a lookup table in which setpoint performance profiles of a temporal progression of performance events of at least one hardware performance counter for an application to be executed and monitored on an application processor are stored. The monitoring system further comprises evaluation logic which is connected to the lookup table and is designed to record the temporal progression of the performance events during the execution of the application to be monitored and to compare it with the setpoint performance profiles stored in the lookup table. However, a deterministic behaviour cannot be expected or ensured.

US 2008/250415 A1 discloses for example a method and a device for restricting a performance of processing elements based on a priority of software units. Priority-aware power management logic receives the priority levels of software units and accordingly changes the operating points of processing elements connected to the software units. In a power-saving mode, processing elements that execute low-priority applications and/or tasks are reduced to a lower operating point, i.e. lower voltage, lower frequency, restricted command output, restricted memory access, and/or less access to shared resources. In addition, the utilization logic can track the utilization of a resource per priority level, allowing the power manager to determine operating points based on the effects of the individual priority levels on each other from the point of view of the resources themselves. In addition, a software unit can itself assign operating points that are enforced by the power manager.

US 6,189,022 B1 discloses a method for planning periodic incremental processes and for the timely design of processes taking into account a criticality.

Green Hills Software provides similar software-based means that are managed by the operating system and monitor certain hardware functions. The solution developed by Green Hills Software does not monitor the progress of the applications. Instead, resource utilization is determined and controlled during operation, in a similar manner to that in EP 3 291 094 A1. However, these software-based means may themselves be affected by interference with other applications caused by the processor cores, on which the applications are executed, simultaneously attempting to access the shared resources. In the known systems, an execution time of one or more applications may therefore vary. The execution time of an application therefore cannot be deterministically determined in advance.

For systems that have a high criticality and/or a high priority and thus, for example, require high reliability and/or high stability, it would be desirable for shared resources to be accessed in a coordinated and, in particular, deterministic manner in order to meet the set requirements.

### SUMMARY OF THE INVENTION

The invention is defined by the independent claims. The dependent claims define advantageous embodiments.

The present application discloses advantageous possible ways of determining a need to restrict an application in a reliable and non-intrusive manner, regardless of the integrity level of the application.

The invention is based on the integration of a hardware module - hereinafter referred to as the *time management unit* (TMU) - into a processor. All the resources required for interference-free operation are included in the TMU, do not require access to other resources, and provide the means for accurately and reliably reducing interference.

The invention can reduce the effort involved in developing applications for the system, since safety-related aspects are managed by the TMU and the applications are easy to couple to the TMU or can interact with the latter. The use of a TMU can also enable a simplified system configuration and/or provide data that facilitate certification of security-related applications.

According to a first aspect of the invention, a system for managing execution of a multiplicity of applications by a multi-core processor on a multiplicity of shared resources comprises a time management unit, TMU, for controlling the execution of at least one application of the multiplicity of applications; a control and/or message bus for transmitting messages between the TMU and each of a multiplicity of cores of the multi-core processor; connection and/or arbitration logic for connecting the multiplicity of cores of the multi-core processor to a multiplicity of shared resources based on an action by the TMU to control the execution of the at least one application; wherein the TMU is configured to receive a "checkpoint reached" message from the at least one application, and the "checkpoint reached" message is sent by the at least one application.

According to one development, the system further comprises an assembly for providing a reference time, which is coupled to the TMU, and the TMU is further configured to: obtain a current time stamp from the assembly for providing the reference time and calculate an actual period for reaching the checkpoint relative to the beginning of a time window for executing at least one application.

According to one development, the system further comprises a checkpoint table which specifies at least one checkpoint for each of the multiplicity of applications and uniquely identifies each checkpoint by means of a key, and the TMU is further configured to: look up an entry in the checkpoint table based on the key that has been transmitted with the "checkpoint reached" message or ascertained with the assistance of the TMU.

According to one development, the TMU is further configured to: update the actual period for executing the at least one application in the checkpoint table entry and/or update a status of the execution of the at least one application in the checkpoint table entry.

According to one development, the TMU is further configured to: compare the actual period with an expected period in the entry in the checkpoint table; and, if the actual period exceeds the expected period, obtain one or more rules associated with the entry in the checkpoint table.

According to one development, the TMU is further configured to: act based on the one or more rules associated with the entry in the checkpoint table, wherein the action comprises restricting access to one or more of the shared resources for one or more cores of the multi-core processor in order to increase a processing speed of the at least one application.

According to a second aspect, the invention relates to a method for managing the execution of a multiplicity of applications using the system as described above. The method comprises receiving, by means of the TMU, a "checkpoint reached" message, wherein the "checkpoint reached" message is sent by the at least one application.

According to one development, the method further comprises obtaining a current time stamp from the assembly for providing the reference time and calculating an actual period for reaching the checkpoint relative to the beginning of a time window for executing the at least one application.

According to one development, the method further comprises looking up an entry in the checkpoint table based on the key that has been transmitted with the "checkpoint reached" message or ascertained with the assistance of the TMU.

The TMU can also ascertain the key completely or partially by other means. The key is not generated completely in the application (only the checkpoint number is transmitted by the application's program code). Other hardware mechanisms add the "Core ID" (e.g. the TMU or executing core). In addition, the hardware can append additional information to the message (for example information about the process and/or memory context).

According to one development, the method further comprises updating the actual period for executing the at least one application in the checkpoint table entry and/or updating a status of the execution of the at least one application in the checkpoint table entry.

According to one development, the method further comprises comparing the actual period with an expected period in the entry in the checkpoint table; and, if the actual period exceeds the expected period, obtaining one or more rules associated with the entry in the checkpoint table.

According to one development, the method further comprises acting based on the one or more rules associated with the entry in the checkpoint table, wherein the action comprises restricting access to one or more of the shared resources for one or more cores of the multi-core processor in order to increase a processing speed of the at least one application.

According to one development, the method further comprises checking that access is restricted and/or partially and/or completely cancelling the access restriction.

According to one development, the method further comprises providing an indicator that indicates whether or not the at least one application has reached an execution goal in a predefined time.

### BRIEF DESCRIPTION OF THE DRAWINGS

The invention will be explained below with reference to the figures of the drawings. In the figures:
- Fig. 1: shows a system having a time management unit (TMU), coupled to a multi-core processor and shared resources, for managing the execution of applications by the multi-core processor according to one exemplary embodiment of the invention;
- Fig. 2: shows an exemplary technical structure of a TMU according to one exemplary embodiment of the invention;
- Fig. 3: shows an exemplary method of operation of a TMU when executing a task according to one exemplary embodiment of the invention; and
- Fig. 4: shows an exemplary method which can be carried out by a TMU in order to manage the execution of applications by a multi-core processor according to one exemplary embodiment of the invention.

In the figures, the same reference signs denote identical or functionally identical components, unless stated otherwise.

### DETAILED DESCRIPTION OF EXEMPLARY EMBODIMENTS OF THE INVENTION

The invention is essentially based on a time management unit (TMU) which can be coupled to a multi-core processor or integrated into a multi-core processor. The TMU can be configured to track the progress of one or more applications executed on one or more cores of a multi-core processor, wherein the tracking can be carried out, for example, by means of one or a multiplicity of checkpoints per application. The TMU can also be configured to trigger actions, such as the restriction of one or more cores by limiting the use of shared resources, if, for example, an application must comply with a predetermined or preset limit for an execution time and has not reached one or more checkpoints at specified times.

The TMU may also be configured to provide means that make it possible to collect data relating to checkpoints and execution times, for example for diagnostic purposes, and/or in order to facilitate a configuration of the TMU, e.g. for initialization.

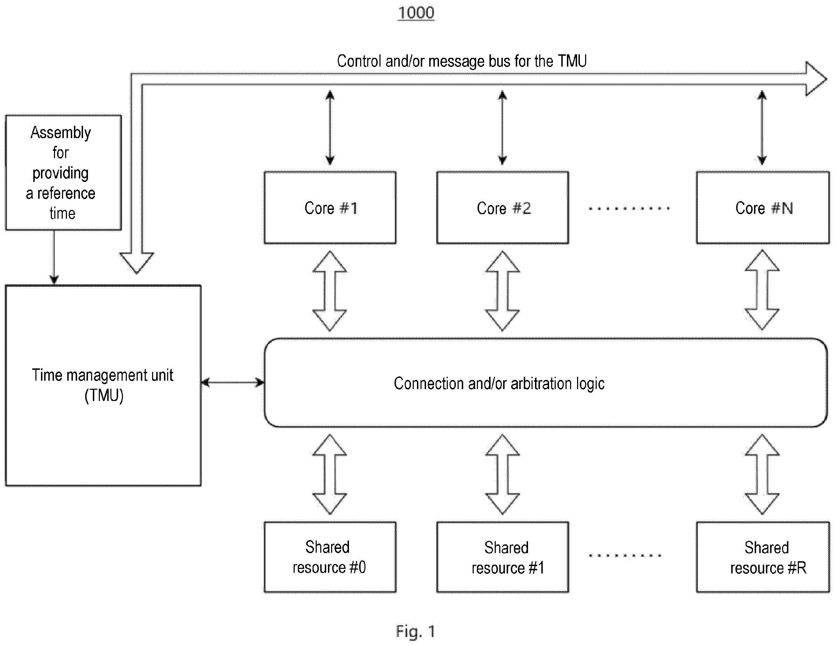

To track progress of an application's execution on each core of the multi-core processor, the application includes one or more checkpoint instructions in the program code. When an application reaches one of the checkpoint instructions, it tells the TMU which checkpoint of the application has been reached by sending a "checkpoint reached" message to the TMU. The TMU can use an identifier to search a checkpoint table for a corresponding entry with data and can use the data to determine whether the application is currently ahead or behind. If it is behind, the data in the checkpoint table can indicate which actions must be triggered by the TMU, as described in detail with reference to Figs. 1 to 4.

Fig. 1 shows a system 1000 having a time management unit (TMU), coupled to a multi-core processor having a multiplicity of cores #1 to #N and shared resources #0 to #R, for managing the execution of applications by the multi-core processor according to one embodiment of the invention.

By means of the TMU, the multi-core processor is able to detect a need for restriction and thus perform priority-based restriction of access to shared resources. The system 1000 can provide in hardware one or more cores, connection and/or arbitration logic, the collision-free connections for control, data and address buses between cores, but also to one or more shared resources and/or hardware blocks, and can include the TMU. The TMU can instruct the connection and/or arbitration logic as to which processor cores should be given a higher access priority than any other processor core. The connection and/or arbitration logic can also be implemented as one or more separate units for different, additional hardware elements. In this case, the TMU would be able to communicate with all arbitration units to be controlled.

Fig. 1 shows, by way of example, a control and/or message bus that can be used to transmit messages. The TMU can receive messages from each core, and each core can receive certain messages from the TMU. For example, configurations and data for diagnostic purposes can be exchanged between the TMU and a core in order to control the system 1000. Even though the control and/or message bus is represented as a specific element in order to describe a functional principle of the TMU, it is clear to a person skilled in the art that other implementations and functional principles are also possible and are included in the present disclosure.

The system 1000 may also include an assembly for providing a reference time. The assembly for providing the reference time can provide a stable and sufficiently accurate and precise reference time, e.g. in order to assign a time to a message that is received or sent by the TMU, and/or in order to make it possible to calculate a time period, e.g. for determining an execution time of an application executed on the system 1000.

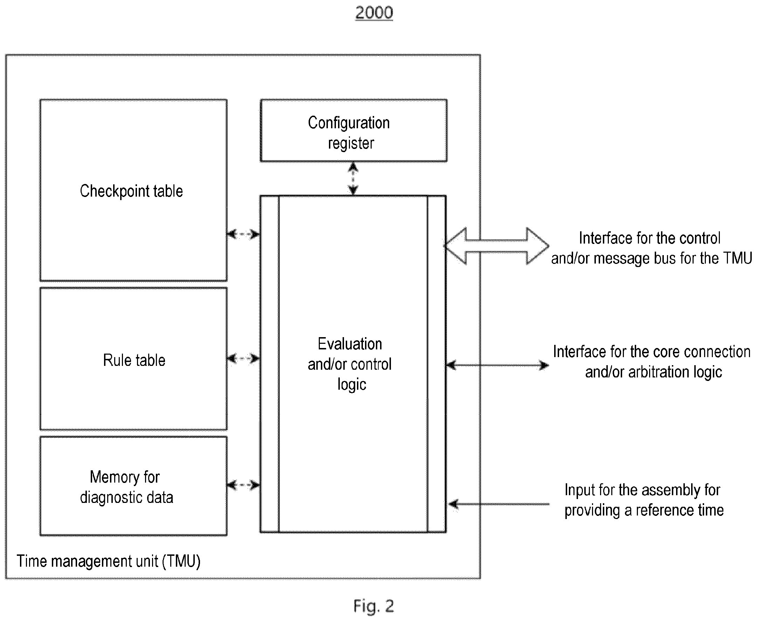

The TMU can be configured to determine a time or retrieve a time stamp using the assembly for providing the reference time. As shown in Fig. 2, the TMU may comprise a means, e.g. evaluation and/or control logic, for time-stamping any received "checkpoint reached" messages. The TMU may also include or be coupled to one or more checkpoint tables and/or rule tables.

The checkpoint tables include data and/or information relating to one or more checkpoints of one or more applications. The data and/or information can indicate one or more actions that need to be performed if, for example, a "checkpoint reached" message has been received. An entry in a checkpoint table can refer to one or more entries in one or more rule tables.

The entries in a rule table can indicate, for example, what type of actions must be initiated by the TMU when processing the receipt of a "checkpoint reached" message. The TMU can be configured to initiate the required action in an assembly responsible for the restriction. Initiation by the TMU can take place without a further action by the TMU, with the result that the action required for the restriction is only carried out by the responsible assembly.

The TMU may include an optional memory for diagnostic data and/or diagnostic information. The TMU can be configured to record the diagnostic data and/or diagnostic information, for example in order to optimize operation of the TMU, as described in detail below.

The TMU can also include a configuration register or be coupled to a configuration register in order to configure the behaviour/mode of operation of the TMU.

In order to enable the TMU to detect a need to restrict an application, applications executed on the cores must report their progress to the TMU at appropriate, not necessarily regular intervals. It may be possible for all applications that can be executed on the cores to report their progress to the TMU.

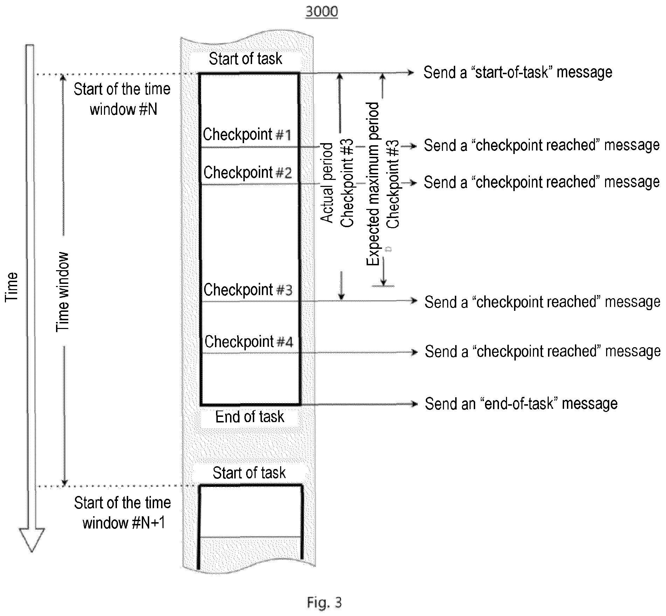

Fig. 3 illustrates an exemplary method of operation of a TMU when executing a task according to one embodiment of the invention. When the execution of a task is started, a "start-of-task" message is sent to the TMU. For example, the message can be sent to the TMU by the task itself and/or by another means, such as a scheduler. Similarly, when a task has been completed, the TMU can be notified, thus making it possible to indicate, for example, that the core on which the task has been executed can enter a quiescent state, with the result that there is no longer any need to access one or more shared resources. It would therefore be possible to allow the TMU to re-evaluate the usage guidelines for the shared resources.

If a task has not been completed within a time period assigned to it, as a result of which a deadline can be missed for example, other hardware or software components may notify the TMU, although this is not necessary for the proper operation of the TMU.

The example shown in Figure 3 shows a task in which instructions for sending a "checkpoint reached" message to the TMU are included at four different points. These messages can indicate which checkpoint has been reached.

Fig. 3 shows an actual period for reaching checkpoint #3 for checkpoint #3, which period is greater than the expected maximum period for reaching checkpoint #3. The TMU can initiate restriction measures for other cores or function blocks, for example based on rules relevant to checkpoint #3, in order to provide the task with more resources, e.g. so that subsequent checkpoints can be complied with again. If the actual period were less than the expected maximum period, the messages could conversely indicate to the TMU that no restriction is required. Alternatively, some or all of the existing restriction measures can be reduced because the task's progress is below a maximum threshold for the expected execution period.

In addition to the processor cores, modern processors can include further, often independently acting, function blocks which can also access shared resources. Cores and/or function blocks may be restricted to save energy. A restriction according to the present invention can be carried out, on the other hand, in order to allow other processes and/or applications to comply with planned execution times in a deterministic manner.

When the TMU receives a "start-of-task" message, an "end-of-task" message, or a "checkpoint reached" message, the TMU must be able to uniquely identify the respective message with respect to the task and/or application that sent it and the core on which the task is executed. Such a message can contain, for example, a unique identifier associated with the message itself, for example under one condition that the application is not and is never executed on a plurality of cores at the same time. The message may also contain an identifier of a core, a "core ID", on which the application is executed, or the processor provides additional or alternative means that allow the TMU to reliably, in particular uniquely, determine the core from which the message originates.

The above-mentioned messages may also contain additional information that indicates, for example, that a specific rule should or should not be used for the application and/or that diagnostic data need to be collected for the application. An entry in the checkpoint table of the TMU can thus also be overridden.

The "start-of-task" messages and/or "end-of-task" messages can also be specialized versions of "checkpoint reached" messages in which a type of attribute or flag is set in order to indicate whether the message is actually a "checkpoint reached" message or indicates the start or end of a task that is monitored by the TMU.

Sending messages to the TMU, configuring a behaviour of the TMU and/or filling the one or more checkpoint tables and/or rule tables can be carried out in different ways, e.g. using the control and/or message bus shown in Fig. 1 for the TMU. Alternatively or additionally, instructions can be added to the instruction sets of the cores.

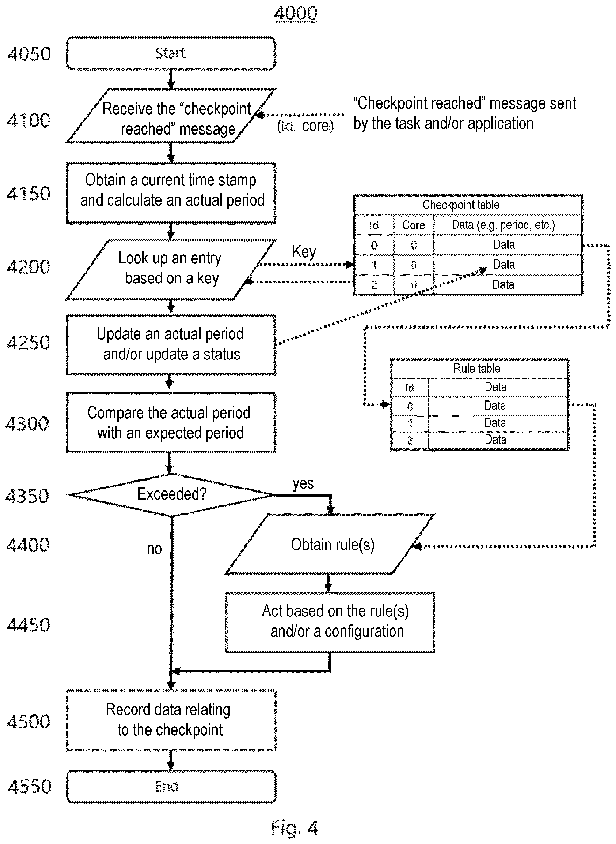

As partially shown in Fig. 4, the TMU can access entries in the checkpoint table by means of a key. For example, the key can comprise or consist of an identifier of a checkpoint, the "checkpoint ID", and an identifier of a core, the "core ID". The checkpoint identifier can be part of the "checkpoint reached" message received by the TMU. The core identifier can indicate the core from which a checkpoint message originates. Alternatively, the core identifier can be obtained through a specific design of hardware or as part of a message.

An entry in the table can be uniquely identified with a given key. Keys that do not match an entry in the checkpoint table can be ignored, for example. Alternatively or additionally, a status can be set to an error code and/or a special rule can be triggered, e.g. a special default entry in the checkpoint table and/or a rule table, and/or information relating to the "checkpoint reached" message can be written to a dedicated memory area.

An exemplary checkpoint table is shown in Table 1 below. An entry of the multiplicity of possible entries #1 to #N in the checkpoint table can include at least one, a multiplicity of, or all of the entities described below.

**Table 1**

| Key | | | | Status | |
|---|---|---|---|---|---|
| Checkpoint ID | Core ID | Expected period | Actual period | Reached/Counter | Link to the rule table |
| #1 | | | | | |
| #2 | | | | | |
| ... | | | | | |
| #N | | | | | |

For example, the checkpoint table can include an identifier of a checkpoint, the "checkpoint ID", which may be part of the "checkpoint reached" message received by the TMU.

The checkpoint table can include an identifier of a core, the "core ID", which can indicate the core from which a checkpoint message originates.

The checkpoint table can include an expected period that can indicate a period relative to a start of a time window for executing an application, thus providing information about when an application should have reached a specific time stamp at the latest.

The checkpoint table may include an actual period that may include a time stamp that is inserted by the TMU into the "checkpoint reached" message received last. In other words, the TMU can add a time stamp to the received "checkpoint reached" message and insert it into the checkpoint table. The insertion takes place in the checkpoint table entry to which the message refers.

The checkpoint table can include a status that can indicate whether the checkpoint has been reached in the current time window, i.e. whether a "checkpoint reached" message has been received. Alternatively or additionally, the status can indicate, among other things, how often the checkpoint has been reached.

The checkpoint table can also include a configuration option that can indicate a configuration setting that affects the behaviour of the TMU in relation to one or more checkpoints. For example, the configuration option can indicate whether (a) a rule is applied only if the actual period has exceeded the expected period, (b) a rule is always applied, (c) the rule received with the "checkpoint reached" message (if any) takes precedence over the rule indicated in the checkpoint entry, and/or (d) information relating to the "checkpoint reached" message can be written/cannot be written to a dedicated memory area, e.g. for diagnostic purposes.

The checkpoint table can also include a link to a rule table, which can be a link or an index pointing to an entry in a rule table. The entry in the rule table can indicate to the TMU, for example, which action may or may not be triggered. The link and/or index may be modified by information contained in a "checkpoint reached" message. Rules can also be concatenated with each other, e.g. by referring to a plurality of rules, such that, after applying one rule, another rule is applied. Whether a rule chain is followed can also be configured by the configuration option of e.g. the current checkpoint entry.

A rule table can contain one or more entries that indicate to the TMU what actions it should execute itself and/or should be triggered in other hardware blocks of the processor. For example, a rule might be to change quality of service parameters for a specific shared resource that gives preference to one core over other cores to access the resource. For example, access could be granted more frequently and/or for longer periods of time to a preferred core in order to accelerate the progress of one application compared to applications executed on other cores.

The TMU can place a checkpoint table and optionally a rule table in a memory with exclusive access rights in order not to have to rely on other, possibly shared, resources and/or to behave in a deterministic way in terms of time. In addition, there can be a single TMU for the entire processor that manages "checkpoint reached" messages and shared resources for all processor cores. Alternatively or additionally, a dedicated TMU may be assigned to a subset of processor cores/function blocks and/or shared resources.

The TMU can be configured during initialization of a multi-core processor. The TMU receives a list of all possible checkpoint messages and a checkpoint table of the TMU is filled accordingly. In other words, the available data and information entered for the entities of the table are entered in the checkpoint table of the TMU for all applications, as described e.g. with reference to Table 1.

During initialization of the multi-core processor, the TMU can receive a list of rules for actions to be taken in the event of checkpoint time violations. The rules can be stored by the TMU in one or more rule tables.

When a scheduler activates a task on a specific core of the multi-core processor, it can indicate to the TMU the start of execution on this specific core. The TMU in turn can retrieve the current time stamp and refer to it, for example, as the "start of the execution time frame".

During execution of the application, the application can send a "checkpoint reached" message as soon as it has reached a checkpoint. The message can contain at least an identifier of the checkpoint. The message can also contain a reference to a rule that needs to be applied, for example. Whether the rule is applied only when the checkpoint is reached later than allowed, or in any case, can be determined by the TMU that evaluates the message.

Fig. 4 shows an exemplary method 4000 which can be carried out by a TMU in order to manage the execution of applications by a multi-core processor according to one embodiment of the invention.

After a start 4050 of the method 4000, the TMU may be configured to receive 4100 a "checkpoint reached" message. The "checkpoint reached" message is sent from an application to the TMU, based on a program code of the application. The checkpoints are placed in the application's program code so as to indicate the progress the application is making while it is being executed.

After the "checkpoint reached" message has been received 4100 by the TMU, the method may include one or more of the steps described below.

The method 4000 can include obtaining 4150 a current time stamp. The obtaining 4150 can include calculating the actual period to reach the checkpoint relative to the start of the time window for executing the task or application. The objective of the TMU is to determine whether the checkpoint was reached within a predetermined time stored in the checkpoint table.

The method 4000 may include looking up 4200 an entry in the checkpoint table based on a key that was transmitted with the "checkpoint reached" message and/or was determined by the TMU with the aid of said message. The key may include an identifier of the checkpoint, the "checkpoint ID", and/or an identifier of the core, the "core ID", on which the task or application is executed.

The method 4000 can include updating 4250 the actual period of the task or application in the entry in the checkpoint table and/or updating a status in the checkpoint table entry. Updating the status in the checkpoint table entry can include, for example, setting a flag and/or, if the status is a counter, incrementing the counter by a unit.

The method 4000 may include comparing 4300 the actual period with an expected period for the entry in the checkpoint table.

If the actual period exceeds the expected period (4350, Yes), the method can include obtaining 4400 one or more rules from a rule table. The rule table can be associated with the entry in the checkpoint table.

The method 4000 may include acting 4450 based on the rule and/or a rule contained in the received "checkpoint reached" message and/or based on a configuration option.

The rule actually applied ultimately restricts access to one or more shared resources for one or more cores of the multi-core processor in order to improve the processing speed of the applications that are lagging behind their progress plan in terms of time.

The method 4000 may be terminated in a step 4550 in response to the action 4450 or in response to determining that the actual period does not exceed the expected period (4350, No).

Optionally, e.g. depending on a configuration of the TMU, the method 4000 may also include recording 4500 data relating to the checkpoint. When recording 4000 data, information relating to one, a plurality of, or all received "checkpoint reached" messages can be written to a dedicated memory area.

The memory area can be organized as a ring buffer that always overwrites the oldest entries in the buffer. The buffered information may include, inter alia, identifiers, flags and/or counter values, actual period and/or applied rule(s) for diagnostic purposes as additional means in order to make it possible to determine appropriate values for an expected period for executing a task or application, and/or to facilitate the determination of appropriate locations in the application's program code to send a "checkpoint reached" message.

The TMU can update restriction settings for shared resources at regular, possibly also configurable, intervals in order to make it possible to optimally use the resources in a simultaneously deterministically determined execution time.

### LIST OF REFERENCE SIGNS

- 1000: System with a time management unit (TMU)
- 2000: Technical structure of a TMU
- 3000: Method of operation of a TMU when executing a task
- 4000: Method with steps 4050 to 4550 performed by a TMU

## Claims

1. System (1000) for managing execution of a multiplicity of applications by a multi-core processor on a multiplicity of shared resources, comprising:
a time management unit, TMU, (2000) for controlling the execution of at least one application of the multiplicity of applications;
a control and/or message bus for transmitting messages between the TMU (2000) and each of a multiplicity of cores of the multi-core processor;
connection and/or arbitration logic for connecting the multiplicity of cores of the multi-core processor to a multiplicity of shared resources based on an action by the TMU (2000) to control the execution of the at least one application;
wherein the TMU is configured to receive (4100) a "checkpoint reached" message from the at least one application, and the "checkpoint reached" message is sent by the at least one application.

2. System (1000) according to Claim 1, wherein the system (1000) further comprises an assembly for providing a reference time, which is coupled to the TMU (2000), and the TMU (2000) is further configured to:
obtain (4150) a current time stamp from the assembly for providing the reference time and calculate an actual period for reaching the checkpoint relative to the beginning of a time window for executing the at least one application.

3. System (1000) according to Claim 2, wherein the system (1000) further comprises a checkpoint table which specifies at least one checkpoint for each of the multiplicity of applications and uniquely identifies each checkpoint by means of a key, and the TMU (2000) is further configured to:
look up (4200) an entry in the checkpoint table based on the key that has been transmitted with the "checkpoint reached" message or ascertained with the assistance of the TMU.

4. System (1000) according to Claim 3, wherein the TMU (2000) is further configured to:
update (4250) the actual period for executing the at least one application in the checkpoint table entry and/or update a status of the execution of the at least one application in the checkpoint table entry.

5. System (1000) according to Claim 4, wherein the TMU (2000) is further configured to:
compare (4300) the actual period with an expected period in the entry in the checkpoint table; and
if the actual period exceeds the expected period (4350, Yes), obtain (4400) one or more rules associated with the entry in the checkpoint table.

6. System (1000) according to Claim 5, wherein the TMU (2000) is further configured to:
act (4450) based on the one or more rules associated with the entry in the checkpoint table, wherein the action (4450) comprises restricting access to one or more of the shared resources for one or more cores of the multi-core processor in order to increase a processing speed of the at least one application.

7. Method (4000) for managing execution of a multiplicity of applications using the system (1000) according to any one of Claims 1 to 6, wherein the method (4000) comprises:
receiving (4100), by means of the TMU (2000), a "checkpoint reached" message, wherein the "checkpoint reached" message is sent by the at least one application.

8. Method (4000) according to Claim 7, wherein the method (4000) further comprises:
obtaining (4150) a current time stamp from the assembly for providing the reference time and calculating an actual period for reaching the checkpoint relative to the beginning of a time window for executing the at least one application.

9. Method (4000) according to Claim 8, wherein the method (4000) further comprises:
looking up (4200) an entry in the checkpoint table based on the key that has been transmitted with the "checkpoint reached" message or ascertained with the assistance of the TMU.

10. Method (4000) according to Claim 9, wherein the method (4000) further comprises:
updating (4250) the actual period for executing the at least one application in the checkpoint table entry and/or updating a status of the execution of the at least one application in the checkpoint table entry.

11. Method (4000) according to Claim 10, wherein the method (4000) further comprises:
comparing (4300) the actual period with an expected period in the entry in the checkpoint table; and
if the actual period exceeds the expected period (4350, Yes), obtaining (4400) one or more rules associated with the entry in the checkpoint table.

12. Method (4000) according to Claim 11, wherein the method (4000) further comprises:
acting (4450) based on the one or more rules associated with the entry in the checkpoint table, wherein the action (4450) comprises restricting access to one or more of the shared resources for one or more cores of the multi-core processor in order to increase a processing speed of the at least one application.

13. Method (4000) according to Claim 12, wherein the method (4000) further comprises:
checking that access is restricted and/or partially and/or completely cancelling the access restriction.

14. Method (4000) according to any one of Claims 7 to 13, wherein the method (4000) further comprises:
providing an indicator that indicates whether or not the at least one application has reached an execution goal in a predefined time.
